# EUROPEAN PATENT SPECIFICATION

(11) **EP 1 059 993 B1**
(45) Date of publication and mention of the grant of the patent: **14.05.2003**
(21) Application number: 99905088.3
(22) Date of filing: 18.02.1999
(51) Int. Cl.: B01D 45/12

(54) **CLEANING APPARATUS**
REINIGUNGSVORRICHTUNG
DISPOSITIF D'EPURATION

(30) Priority: 19.02.1998 GB 9803539
(43) Date of publication of application: 20.12.2000
(73) Proprietor: Arnold, Adrian Christopher, Tavistock, Devon PL19 0NG (GB); Arnold, Arthur John, Devon EX20 4BJ (GB)
(72) Inventor: Arnold, Adrian Christopher, Tavistock, Devon PL19 0NG (GB); Arnold, Arthur John, Devon EX20 4BJ (GB)
(74) Representative: Harrison, Ivor Stanley
(86) International application number: GB9900507
(87) International publication number: WO99042198

(56) References cited:
- DE-A- 3 309 518
- GB-A- 2 136 326
- US-A- 4 328 008
- US-A- 5 221 299

## Description

This invention relates to cleaning apparatus of the type for separating particulate matter from a fluid stream such as an airstream, such as required for example in so-called bagless vacuum cleaners.

WO 96/11047 describes apparatus for the removal of particulate material suspended in a gas stream, in which rotary motion is generated in the stream which is then passed to an expansion chamber where the gases are decelerated to enable particulates to fall out of suspension and to be collected in a collection chamber. It has been found that, whereas such apparatus deals effectively with large and medium-sized particles, small particles tend to remain entrained in the gas stream and are exhausted to atmosphere. Clearly, where the apparatus is incorporated in a suction cleaner for indoors use, the result is that the small particulate matter tends to be recycled in the room being cleaned and, having left the apparatus in the exhaust stream, it eventually settles as dust on furniture or the floor.

It is an object of the present invention to provide apparatus which is more effective in separating smaller as well as large particulate matter from an airstream.

According to one aspect of the invention, there is provided apparatus for separating particulate matter from a fluid stream, the apparatus comprising a housing including means for intake of particulates-containing fluid and means for exhaust of cleaned fluid, in which the apparatus includes means for generating a primary vortex in the intake fluid and the housing comprises a separation zone which includes primary and secondary separation chambers each associated with respective particulates collection means and including interconnection means adapted to generate a secondary vortex in the secondary separation chamber.

Preferably, the fluid is air although a liquid stream could be cleared of particulates in the inventive apparatus. For convenience, the term "airstream" will be used through the remained of this specification as including other fluids, including liquids.

In operation, heavier particulates pass through the interconnection means from the primary to the secondary chamber and are separated from the airstream therein, whereas lighter particulates are retained within the primary chamber. The primary chamber and secondary chambers are preferably peripherally interconnected and the primary chamber preferably includes a parallel-sided or cylindrical portion and a cyclone portion. The cylindrical portion accommodates the interconnection means and may be disposed relatively upstream of and co-axial with the cyclone portion, which is preferably tapered inwardly in the downstream direction. The secondary chamber is preferably cylindrical and peripherally connected to the primary chamber in the parallel-sided portion, whereby the respective axes of the primary and secondary chambers are parallel. Dirt-laden air entering the separation zone of the primary chamber is constrained to follow a spiral pathway around and progressively along the axis thereof, optionally under the influence of vanes or other deflection means disposed internally of the primary chamber on the roof or wall thereof. Particulate material entrained therein is forced under the influence of centripetal force towards the wall of the chamber, the larger and denser particles, being more influenced by centripetal force than the smaller and less dense particles, being urged to follow the wall more closely. As the denser material moves around the periphery of the primary chamber, it reaches the intercommunicating connection with the secondary chamber and is urged to enter therein by centripetal force. The secondary vortex created therein, preferably in the opposite rotary sense to the primary vortex, maintains the particles in suspension and carries them to a collection chamber from where they may be removed from time to time. An inwardly-extending annular flange may be provided between the cylindrical and cyclone portions to improve discrimination between heavier and lighter particulates. Optionally, a tertiary or further separation chamber is interconnected with the secondary chamber and provides a corresponding vortex therein.

The lighter material remaining in suspension in the primary chamber is moved spirally to the tapered cyclone portion thereof where it becomes progressively accelerated as the diameter reduces. On reaching the narrowest part, it is ejected from the airstream which then passes, substantially clear of particulate matter, to the exhaust means. The fact that the air in the cyclone part of the apparatus has had the denser particles already removed therefrom results in a lower weight loading of the airstream which allows the airstream to attain greater velocities, resulting in more effective removal of smaller particles than would be expected with a cyclone alone, without the secondary chamber, and the apparatus as a whole having an enhanced ability to handle a wider range of material with greater efficiency and at higher loading rates.

The interconnection means may be adapted to generate a secondary vortex in the secondary chamber by means of current-deflecting elements in the region of the interconnection between the chambers. Preferably, the current-deflecting elements establish a zone of spatial separation between the respective vortices whereby the vortices do not create or at least minimise any turbulence between them while still allowing particulate matter adjacent the wall of the primary chamber to pass unimpeded into the secondary chamber. The current-deflecting elements may comprise a chamber wall portion on at least one side of the intercommunication aperture which is deformed to increase its radius of curvature towards a tangential position, especially the primary chamber wall on the upstream side of the aperture but preferably both the primary and secondary chamber walls on each side of the aperture to provide an interconnecting neck which is generally chordal to both chambers, the deformed wall of the primary chamber allowing the heavier particles to move outwardly of the radius of curvature of the primary chamber and the deformed wall of the secondary chamber acting to separate the primary airstream to create a secondary vortex in the secondary chamber and preferably in the opposite direction to that of the primary vortex.

In the separation zone, the primary separation chamber may contain the cyclone separator, whereby the outer wall of the primary chamber and the wall of the cyclone separator define an annular chamber in peripheral communication with the secondary chamber. The cyclone separator may be arranged for either upward or downward swirling or helical motion of the airstream, with the particulate load thereof being either discharged upwardly so that it settles under gravity in a collection chamber formed about the upper portion of the cyclone separator, or discharged downwardly into a collection vessel disposed below the cyclone separator.

The means for generating a primary vortex in the particulate-containing airstream entering the housing may comprise an array of vanes upstream of the housing, individual vanes being optionally spaced apart axially to prevent clogging by large particulates or filamentary material, or an off-centre, for example, tangential, inlet pipe. An auxiliary air intake may provide a laminar film or layer of dirt-free air at the periphery of the primary chamber across or at least into the interconnection means, to improve retention of lighter particulates in the primary chamber while not substantially impeding transfer of heavier particulates to the secondary chamber. The auxiliary air intake may have an entry orifice in the primary chamber immediately adjacent to or spaced apart from the intake means for particulates-containing air and the auxiliary airstream may be induced by the flow of particulates-containing air across the entry orifice or may be supplied under positive external pressure, for example by an auxiliary pump.

The primary separation chamber may comprise two or more cylindrical portions each with an associated secondary separation chamber, adjacent cylindrical portions being axially connected together by cyclone portions of progressively smaller diameter in the downstream direction.

Embodiments of the invention will now be described by way of example with reference to the accompanying schematic drawings, of which:
Figure 1 is a side view of one embodiment of a separation apparatus;
Figure 2 is a plan view showing the internal parts of the apparatus of Figure 1;
Figure 3 is a side view of another embodiment of separation apparatus;
Figure 4 is a side view of an alternative embodiment to that shown in Figure 3;
Figure 5 is a side view of a further alternative embodiment in which the primary chamber is contained within a larger chamber;
Figure 6 shows in plan view an embodiment of Figure 5 where the larger chamber constitutes the secondary chamber;
Figure 7 shows in plan view another embodiment of Figure 5 where the larger chamber contains the secondary chamber;
Figure 8 shows in plan view the use of a secondary air inlet to enhance the separation of larger particulates from the airstream; and
Figure 9 shows in side view an embodiment in which the primary chamber has multiple cylindrical portions and cyclone portions.

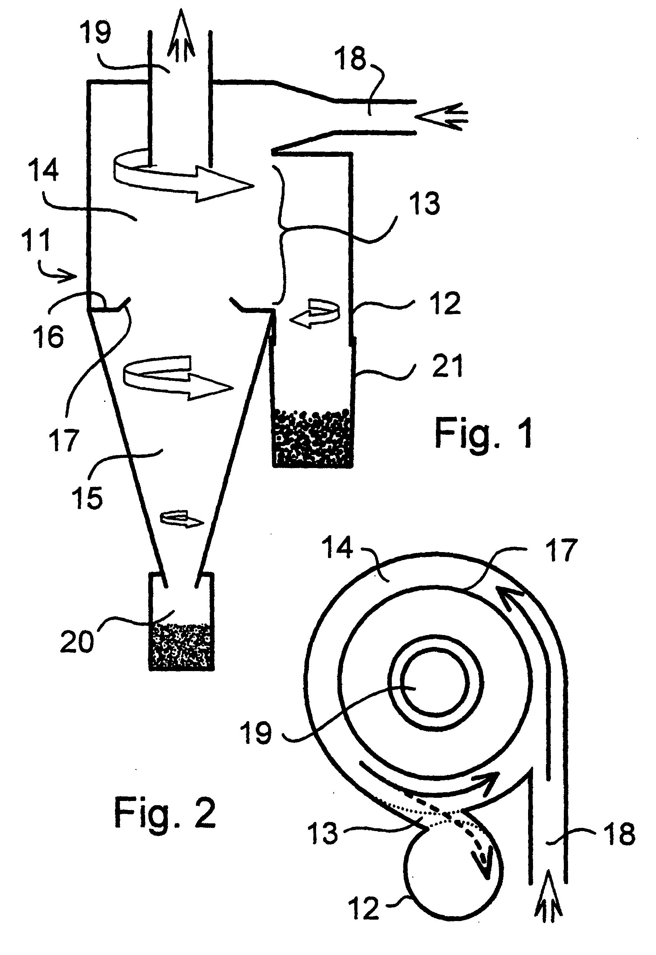

Referring to Figures 1 and 2, the apparatus consists of a primary chamber 11 and a secondary chamber 12 joined by a generally chordal interconnection neck 13 the walls of which are constituted by respective wall portions of the primary and secondary chamber being tangentially deformed and joined to the other chamber. The primary chamber 11 has an upper cylindrical portion 14 and a lower co-axial cyclone separator 15. An inner flange 16 is disposed between the upper and lower parts; the flange has an upwardly-turned inner peripheral lip 17. The flange 16 is not essential.

A tangential inlet 18 is provided at the upper end and also an axial outlet 19 for exhaust air; an electric motor (not shown) draws air through the apparatus, or alternatively may blow air through under positive pressure.

Removable collection vessels 20, 21 are provided to the cyclone separator and secondary separation chamber respectively. As shown by the arrows, inlet air is constrained by the outlet 19 to follow a helical anticlockwise pathway around the inner wall of the cylinder portion of the primary chamber, heavier particulates represented by the dotted arrow being carried through the neck 13 into the secondary chamber, where they follow a helical clockwise pathway. The heavier particles eventually fall by gravity into collection vessel 21; the lighter particles remain entrained in the primary chamber and are separated from the airstream in the cyclone separator, being collected in collection vessel 20. The neck 13 not only provides an access pathway for heavier particulates but also provides a demarcation region between the respective vortices, to minimise generation of turbulence. The flange 16 assists in ensuring that heavier particulates enter the secondary chamber.

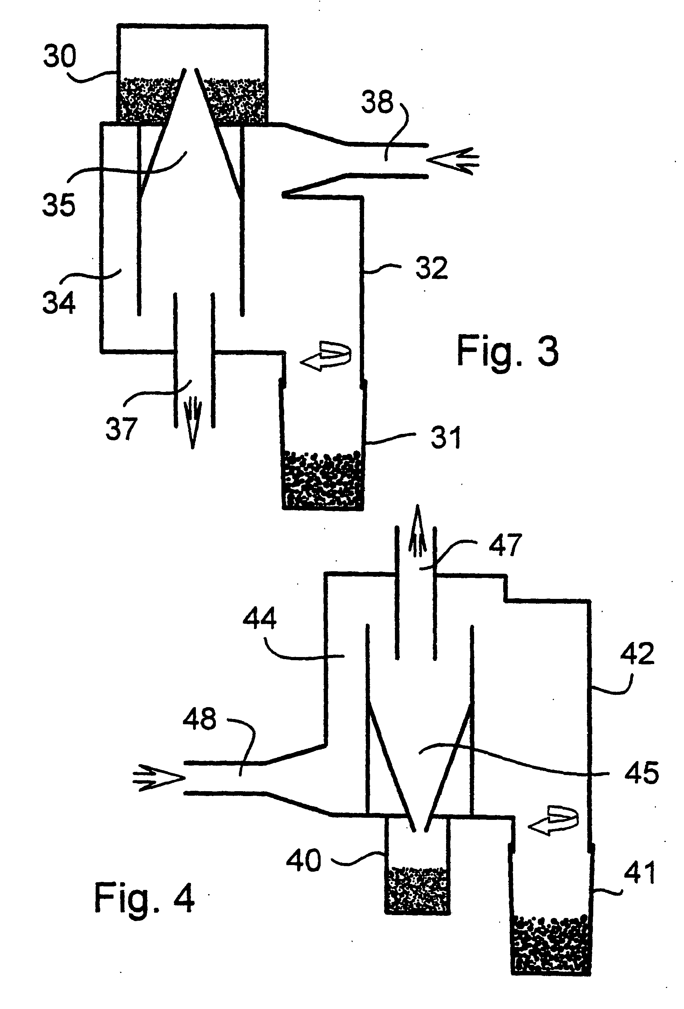

The arrangements illustrated in Figure 3 and 4 have the cyclone separator 35/45 mounted within the cylindrical portion 34/44; in Figure 3, the inlet 38 is at the upper end of the apparatus, the cyclone separator 35 is arranged for upward flow and the helical flow in the cylindrical portion 34 is downwards, exhaust air passing through outlet 37, whereas in Figure 4 the inlet 48 is at the lower end of the apparatus, the helical flow in the cylindrical portion 44 is upwards, the cyclone separator 45 is arranged for downward flow and the exhaust air passes through outlet 47. Collection vessels for lighter particulates are shown as 30/40 and for heavier particulates as 31/41; secondary chambers are shown as 32/42.

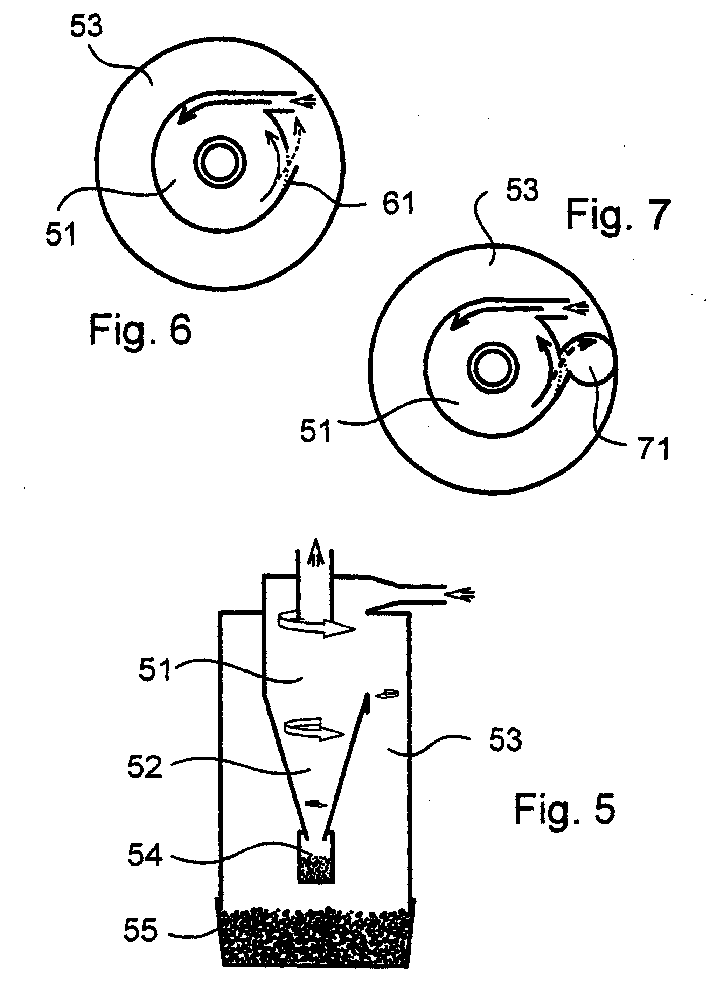

Figure 5 illustrates an alternative arrangement in which the primary separation chamber 51 and associated cyclone 52 are arranged within a larger chamber 53; the respective chambers each have associated collection vessels 54, 55 for lighter (54) and heavier (55) particulates.

In Figure 6, the larger chamber constitutes the secondary chamber and the vortex therein is in the same direction as the primary vortex, as shown by the dashed arrow. The wall of the primary chamber immediately upstream of the interconnection aperture is deformed tangentially at 61 into the secondary chamber to allow the vortex therein to be generated with minimum turbulence. In Figure 7, the secondary chamber 71 is formed wholly within the larger chamber and the vortex therein is in the opposite rotational direction to the primary vortex.

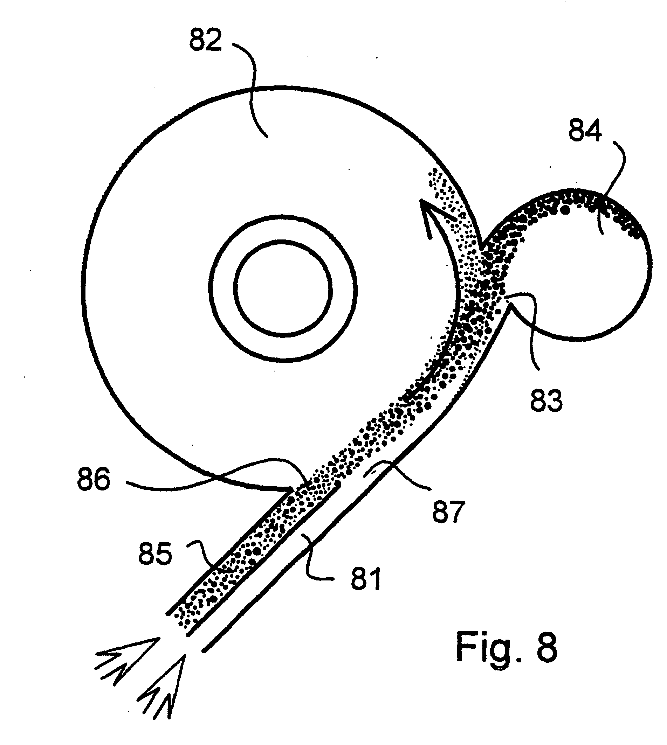

Figure 8 illustrates a secondary air inlet through pipe or channel 81 to provide a laminar film of clean air at the wall of the primary chamber 82 and continuing to the interconnection neck 83 linking the primary chamber with the secondary chamber 84, to maintain the lighter particulates in the primary chamber while not impeding passage of heavier particulates through the neck. The secondary airstream can be supplied from a pump or may be drawn in by the dirt-laden airstream in channel 85 passing through orifice 86 and across the orifice 87 of pipe 81. The secondary airstream flowrate may be restricted by means of adjustment of orifice sizes, to provide selective separation of material entering the apparatus. The orifices 86 and 87 may optionally be circumferentially spaced apart, as an alternative to the arrangement illustrated.

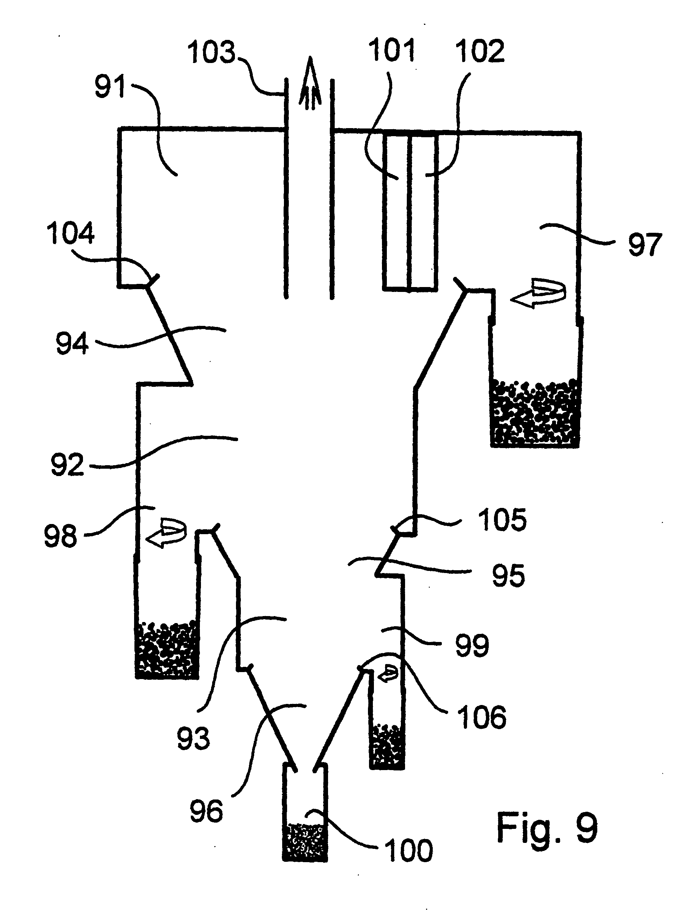

Figure 9 shows multiple primary chambers 91, 92, 93 axially spaced apart and connected by respective cyclones 94, 95, 96, each chamber having an associated respective secondary chamber 97, 98, 99 and cyclone 96 terminating in collection chamber 100. Inlets 101 for dirt-laden air and 102 for secondary clean air are provided in primary chamber 91 and exhaust air passes out through duct 103. Further inlets for secondary clean air may optionally be provided for each of primary chambers 92 and/or 93. Internal annular upturned flanges 104, 105, 106 are provided to enhance passage of heavier particulates into the respective secondary chamber. In operation, the larger or more dense particulates are separated from primary chamber 91 and collected by secondary chamber 97 and material not separated is concentrated in cyclone 94 before entering primary chamber 92 of smaller diameter than primary chamber 91 but otherwise similar. Centriperal forces are greater in chamber 92, whereby the larger particulates therein are separated by secondary chamber 98 and unseparated material passes to primary chamber 93 through cyclone 95 until, ultimately, the lightest particles are separated in cyclone 96 and collected in collection chamber 100.

In all embodiments illustrated, clean exhaust air passes by reverse flow through the centre of the apparatus, and there is no net flow of fluid through the secondary chamber or chambers.

## Claims

1. Apparatus for separating particulate matter including heavier material and lighter material from a fluid stream, the apparatus comprising a housing including means (18) for intake of particulates-containing fluid and means (19) for exhaust of cleaned fluid, the apparatus including a primary chamber (11) comprising a cylindrical portion (14) and a cyclone portion (15), the exhaust means being connected to the primary chamber, a secondary cylindrical chamber (12), means for generating a vortex in the intake fluid in the primary chamber and means for generating a secondary vortex in fluid passing from the primary chamber to the secondary chamber, the primary and secondary chambers each being associated with respective particulates collection means (20, 21), **characterised in that** the secondary chamber is peripherally connected to the cylindrical portion of the primary chamber between the intake means and the cyclone portion, considered in relation to the flow pathway of the intake fluid.

2. Apparatus according to claim 1 including an inwardly-extending annular flange (16) between the cylindrical and cyclone portions of the primary chamber to improve discrimination between heavier and lighter particulates.

3. Apparatus according to any preceding claim, in which the primary and secondary chambers are connected by interconnection means (13) comprising a current-deflecting element comprising a chamber wall portion on at least one side of the interconnection means which is deformed to increase its radius of curvature towards a tangential position.

4. Apparatus according to any preceding claim, including means for introduction of an auxiliary fluid stream to provide a laminar film or layer or dirt-free fluid at the periphery of the primary chamber across or at least into the interconnection means.

5. Apparatus according to any preceding claim, in which the primary chamber comprises two or more cylindrical portions each with an associated secondary separation chamber, adjacent cylindrical portions being axially connected together by cyclone portions or progressively smaller diameter in the downstream direction.

6. A method for separating particulate matter including heavier particulate material and lighter particulate material from a fluid stream, the method comprising constraining particulates-containing fluid to follow a vortical flow pathway in a primary chamber including a cylindrical portion and a cyclone portion and removing therefrom exhaust fluid from which particulates have been removed, **characterised in that** heavier particulates are passed by centripetal force from the cylindrical portion of the primary chamber to a secondary chamber in which they follow a secondary vortical pathway, the heavier particulates being collected from the secondary chamber under the influence of gravity, lighter particulates being retained within the primary chamber and being separated from the fluid stream in the cyclone portion of the primary chamber.

## Patentansprüche

1. Vorrichtung zum Abscheiden teilchenförmiger Materie, welche schwereres Material und leichteres Material umfaßt, aus einem Fluidstrom, wobei die Vorrichtung ein Gehäuse umfaßt, welches eine Einrichtung (18) zum Eintritt eines teilchenhaltigen Fluids und eine Einrichtung (19) zum Austritt des gereinigten Fluids umfaßt, wobei die Vorrichtung eine Primärkammer (11), welche einen zylindrischen Abschnitt (14) und einen Zyklonabschnitt (15) umfaßt, wobei die Austrittseinrichtung mit der Primärkammer verbunden ist, eine sekundäre zylindrische Kammer (12), eine Einrichtung zum Erzeugen eines Wirbels in dem Eintrittsfluid und eine Einrichtung zum Erzeugen eines sekundären Wirbels in dem Fluid, welches von der Primärkammer zu der Sekundärkammer fließt, umfaßt, wobei die Primär- und die Sekundärkammer jeweils mit einer zugeordneten jeweiligen Teilchensammeleinrichtung (20, 21) versehen sind, **dadurch gekennzeichnet, daß** die Sekundärkammer bei Betrachtung in Beziehung zu dem Strömungsweg des Eintrittsfluids peripher mit dem zylindrischen Abschnitt der Primärkammer zwischen der Eintrittseinrichtung und dem Zyklonabschnitt verbunden ist.

2. Vorrichtung nach Anspruch 1, umfassend einen nach innen verlaufenden ringförmigen Flansch (16) zwischen dem zylindrischen Abschnitt und dem Zyklonabschnitt der Primärkammer, um die Trennung von schwereren und leichteren Teilchen zu verbessern.

3. Vorrichtung nach einem beliebigen vorangehenden Anspruch, wobei die Primärkammer und die Sekundärkammer durch eine Verbindungseinrichtung (13) verbunden sind, welche ein Strömungsumlenkelement umfaßt, welches einen Kammerwandabschnitt auf mindestens einer Seite der Verbindungseinrichtung umfaßt, welcher derart verformt ist, daß dessen Krümmungsradius in Richtung auf eine tangentiale Position größer wird.

4. Vorrichtung nach einem beliebigen vorangehenden Anspruch, umfassend eine Einrichtung zum Einleiten eines Hilfsfluidstroms zum Erzeugen eines laminaren Films bzw. einer laminaren Schicht verunreinigungsfreien Fluids an dem Umfang der Primärkammer durch die Verbindungseinrichtung hindurch bzw. zumindest in diese hinein.

5. Vorrichtung nach einem beliebigen vorangehenden Anspruch, wobei die Primärkammer zwei oder mehr zylindrische Abschnitte umfaßt, welche jeweils mit einer zugeordneten sekundären Abscheidekammer versehen sind, wobei benachbarte zylindrische Abschnitte in Axialrichtung durch Zyklonabschnitte mit fortschreitend kleinerem Durchmesser in Abstromrichtung miteinander verbunden sind.

6. Verfahren zum Abscheiden teilchenförmiger Materie, welche schwereres Teilchenmaterial und leichteres Teilchenmaterial umfaßt, aus einem Fluidstrom, wobei das Verfahren ein Leiten des teilchenhaltigen Fluids auf einem wirbelförmigen Strömungsweg in einer Primärkammer mit einem zylindrischen Abschnitt und einem Zyklonabschnitt und ein Ableiten von Austrittsfluid, aus welchem Teilchen entfernt wurden, daraus umfaßt, **dadurch gekennzeichnet, daß** schwerere Teilchen durch die Zentripetalkraft aus dem zylindrischen Abschnitt der Primärkammer in eine Sekundärkammer geleitet werden, in welcher diese einem sekundären wirbelförmigen Strömungsweg folgen, wobei die schwereren Teilchen aus der Sekundärkammer unter dem Einfluß der Schwerkraft gesammelt werden und leichtere Teilchen in der Primärkammer gehalten werden und in dem Zyklonabschnitt der Primärkammer aus dem Fluidstrom abgeschieden werden.

## Revendications

1. Dispositif d'épuration pour séparer de la matière particulaire comprenant de la matière plus lourde et de la matière plus légère provenant d'un écoulement fluide, le dispositif comportant un bâti comprenant des moyens (18) d'admission du fluide contenant des particules et des moyens (19) pour évacuer le fluide épuré, le dispositif comprenant une chambre primaire (11) comportant une partie cylindrique (14) et une partie en cyclone (15), les moyens d'évacuation étant reliés à la chambre primaire, une seconde chambre cylindrique (12), des moyens pour générer un vortex dans l'admission de fluide à l'intérieur de la chambre primaire et des moyens pour générer un second vortex dans le fluide passant de la chambre primaire à la chambre secondaire, les chambres primaire et secondaire étant chacune associées à des moyens de récupération des particules respectives (20, 21), **caractérisé en ce que** la seconde chambre est reliée à sa périphérie à la partie cylindrique de la chambre primaire entre les moyens d'admission et la partie en cyclone, considérés comme se rapportant au chemin d'écoulement du fluide admis.

2. Dispositif selon la revendication 1, comportant une bride annulaire (16) se prolongeant vers l'intérieur entre les parties cylindrique et en cyclone de la chambre primaire pour améliorer la discrimination entre les particules plus lourdes et plus légères.

3. Dispositif selon l'une quelconque des revendications, dans lequel les chambres primaire et secondaire sont reliées par des moyens d'interconnexion (13) comprenant un élément déflecteur de courant possédant une partie de paroi de chambre sur au moins un côté du moyen d'interconnexion, paroi de chambre qui est déformée pour augmenter son rayon de courbure vers une position tangentielle.

4. Dispositif selon l'une quelconque des revendications, comprenant des moyens pour l'introduction d'un écoulement fluide auxiliaire pour produire un film laminaire, une couche ou un fluide exempt de saleté à la périphérie de la chambre primaire à travers ou au moins à l'intérieur des moyens d'interconnexion.

5. Dispositif selon l'une quelconque des revendications, dans lequel la chambre primaire comporte deux parties cylindriques ou plus, chacune présentant une chambre de séparation secondaire associée, les parties cylindriques adjacentes étant reliées entre elles axiallement par des parties en cyclone ou de diamètre progressivement plus petit vers l'aval.

6. Procédé pour séparer de la matière particulaire comprenant une matière particulaire plus lourde et une matière particulaire plus légère provenant d'un écoulement fluide, le procédé comprenant les étapes de contraindre du fluide contenant les particules à suivre une trajectoire d'écoulement tourbillonnaire dans une chambre primaire comportant une partie cylindrique et une partie en cyclone et d'en retirer du fluide à évacuer duquel des particules ont été retirées, **caractérisé en ce que** les particules les plus lourdes passent sous l'effet de la force centripète de la partie cylindrique de la chambre primaire vers une chambre secondaire dans laquelle elles suivent une trajectoire tourbillonnaire secondaire, les particules les plus lourdes étant récupérées de la chambre secondaire par gravité, les particules les plus légères étant retenues à l'intérieur de la chambre primaire et étant séparées de l'écoulement de fluide dans la partie en cyclone de la chambre primaire.
